# EUROPEAN PATENT APPLICATION

(11) **EP 1 464 560 A2**
(43) Date of publication of application: **06.10.2004**
(21) Application number: 04007485.8
(22) Date of filing: 27.03.2004
(51) Int. Cl.: B62D 1/19

(54) **Collapsible steering apparatus for vehicle**

(30) Priority: 31.03.2003 JP 2003095357
(71) Applicant: Fujikiko Kabushiki Kaisha, Kosai-shi, Shizuoka 431-0431 (JP)
(72) Inventor: Hosomi, Norio, c/o Koyo Seiko Co., Ltd., Osaka-shi Osaka 542-0081 (JP); Aota, Kenichi, c/o Koyo Seiko Co., Ltd., Osaka-shi Osaka 542-0081 (JP); Kinoshita, Satoshi, c/o Fujikiko Co., Ltd., Kosai-shi Shizuoka 431-0431 (JP)
(74) Representative: Steil, Christian, Dipl.-Ing.

(57) **Abstract**

A collapsible steering apparatus for a vehicle (1) comprises a movable tube (10) which is displaceable in a longitudinal direction (S) of a steering column (4) in order to adjust the position of a steering wheel (2). There is provided a locking mechanism (29) capable of locking the movable tube (10) to a desired position in the longitudinal direction (S). The locking mechanism (29) comprises a locking teeth forming element (36) which has locking teeth (36a) formed therein and whose movement is regulated at the time of collision of a vehicle, and a groove (42) which holds the locking teeth forming element (36) by a predetermined holding force at the normal time and moves together with the movable tube (10) at the time of collision of the vehicle. At the time of collision of the vehicle, a pair of edges (46a) of the groove (42) is deformed as the locking teeth forming element (36) and the groove (42) relatively move so that shock energy is absorbed.

## Description

### BACKGROUND OF THE INVENTION

### Field of the Invention

The present invention relates to a collapsible steering apparatus for a vehicle.

### Description of Related Arts

Conventionally, examples of steering apparatuses have been ones so adapted that a position in the axial direction of a steering wheel can be adjusted, and shock energy at the time of collision of a vehicle can be absorbed.

Such a conventional steering apparatus, for example, has a fixed bracket fixed to a vehicle body and a steering column supported on the fixed bracket such that the position thereof is adjustable. The steering column has a movable bracket supported on the fixed bracket such that the position thereof is adjustable and a steering column tube fixed to the movable bracket.

A pair of locking teeth which are engaged with each other in order to lock the steering column whose position has been adjusted are provided in the fixed bracket and the movable bracket. When a shock force is exerted on the steering column tube at the time of collision of the vehicle, a part of the movable bracket fractures. Consequently, the steering column tube and the part of the movable bracket move relative to the remaining part of the movable bracket, the pair of locking teeth, the fixed bracket, and the vehicle body (see JP08-80857A, (1996), for example).

In another conventional steering apparatus, one of a pair of releasable locking teeth which are engaged with each other is fixed to a steering column tube, and the other locking tooth is supported on a fixed bracket so as to be relatively slidable at the time of collision in order to lock a steering column whose position has been adjusted. When a shock force is exerted on the steering column tube at the time of collision, the other locking tooth moves relative to the fixed bracket, so that the steering column tube and the pair of locking teeth integrally move relative to the fixed bracket and a vehicle body (see JP10-509395A (1998), for example).

In the former steering apparatus, a shock absorbing load which is a load against shock is determined depending on a fracture load of the movable bracket. Consequently, it is difficult to adjust the shock absorbing load.

On the other hand, in the latter steering apparatus, the steering column tube and the pair of locking teeth integrally move at the time of collision. Accordingly, a space required for the movement is large, thereby increasing the size of the configuration thereof. Further, the/shock absorbing load depends on friction and, therefore, is difficult to adjust.

An object of the present invention is to provide a collapsible steering apparatus for a vehicle which easily adjust a shock absorbing load and can be miniaturized.

### SUMMARY OF THE INVENTION

In a preferred mode of the present invention, a collapsible steering apparatus for a vehicle comprises a steering shaft for connecting a steering wheel; a steering column for supporting the steering shaft so as to be rotatable, the steering column comprising a movable tube which is displaceable in a longitudinal direction of the steering column in order to adjust the position of the steering wheel; and a locking mechanism capable of locking the movable tube to a desired position in the longitudinal direction of the steering column. The locking mechanism comprises a locking teeth forming member which has locking teeth formed therein and whose movement is regulated at the time of collision of the vehicle, and a groove which holds the locking teeth forming member by a predetermined holding force at the normal time and moves together with the movable tube relative to the locking teeth forming member at the time of collision of the vehicle, and the groove comprises a pair of edges extending in the longitudinal direction of the steering column. At the time of collision of the vehicle, a pair of edges of the groove is deformed as the locking teeth forming member and the groove relatively move so that shock energy is absorbed.

According to the present mode, at the time of collision of the vehicle, the movable tube and the groove move relative to the locking teeth forming member. In this case, the edges of the groove are deformed so that shock is absorbed. The deformation is utilized for shock absorption, thereby making it possible to more easily adjust a shock absorbing load, as compared with that in a case where friction and fracture are utilized. Moreover, the movement of the locking teeth forming member is regulated at the time of shock absorption, thereby making it possible to miniaturize the steering apparatus.

### BRIEF DESCRIPTION OF THE DRAWINGS

Figs. 1A and 1B are schematic views showing the schematic configuration of a collapsible steering apparatus for a vehicle according to an embodiment of the present invention, where Fig. 1A illustrates a state before shock absorption, and Fig. 1B illustrates a state at the time of shock absorption;
Fig. 2 is a perspective view of the collapsible steering apparatus;
Fig. 3 is a cross-sectional view taken along a line III - III shown in Fig. 1A, which illustrates a locked state;
Fig. 4 is a cross-sectional view taken along the line III - III shown in Fig. 1A, which illustrates a locking released state;
Fig. 5 is a partially broken perspective view showing a principal part of the collapsible steering apparatus for a vehicle;
Fig. 6 is a schematic view showing a principle part of an inner peripheral surface of an annular member;
Figs. 7A and 7B are schematic views showing the operations of a locking teeth forming element and a groove shown in Fig. 5, where 7A illustrates a state before shock absorption, and Fig. 7B illustrates a state at the time of shock absorption; and
Fig. 8 is a side view showing a locking teeth forming element and an upper tube in a collapsible steering apparatus for a vehicle according to another embodiment of the present invention.

### DETAILED DESCRIPTION OF THE PREFERRED EMBODIMENT

A collapsible steering apparatus for a vehicle according to a preferred embodiment of the present invention will be described while referring to the drawings.

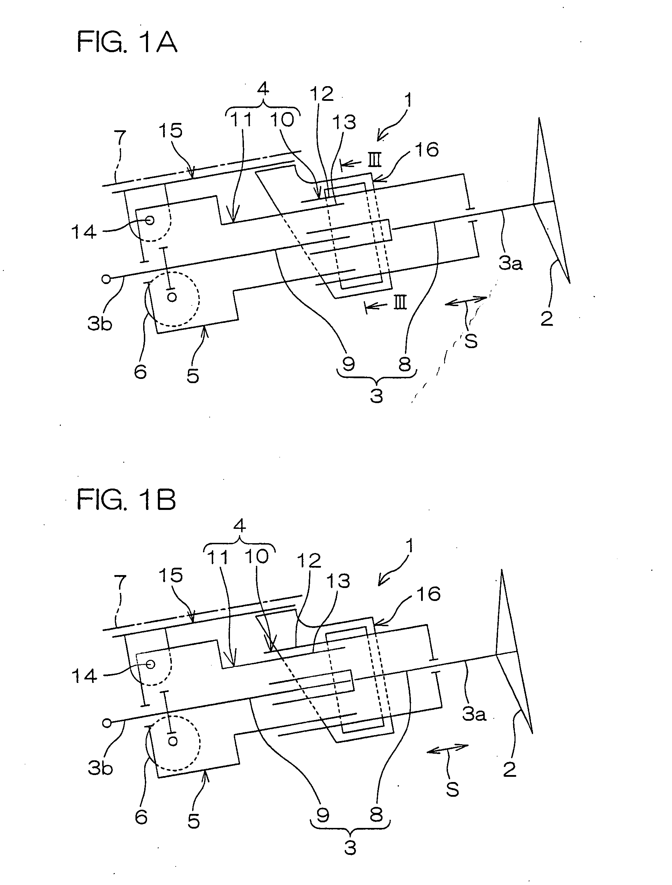

Referring to Fig. 1A, a collapsible steering apparatus 1 for a vehicle according to an embodiment of the present invention comprises a steering shaft 3 for transmitting a steering torque applied to a steering wheel 2 for steering a wheel (not shown), and a steering column 4 for supporting the steering shaft 3 so as to be rotatable with the steering shaft 3 inserted through its inner part. The steering wheel 2 is connected to one end 3a of the steering shaft 3, and a steering mechanism for steering the wheel is connected to the other end 3b through an intermediate shaft (not shown) or the like. When the steering wheel 2 is steered, the steering torque is transmitted to the steering mechanism through the steering shaft 3 or the like, thereby making it possible to steer the wheel.

The collapsible steering apparatus 1 is configured as a power steering apparatus. A steering assist force is obtained in response to the steering torque by an electric motor 6 provided in a housing 5 in the steering column 4.

The collapsible steering apparatus 1 is, for example, attached to a vehicle body 7 (a part of which is indicated by a one-dot and dash line) with a longitudinal direction S of the steering column 4 made diagonal to a longitudinal direction of a vehicle in such a manner that the steering wheel 2 is positioned on the upper side.

The steering shaft 3 comprises a upper shaft 8 having the steering wheel 2 connected to its one end and a lower shaft 9. The upper shaft 8 and the lower shaft 9 are connected to each other by a joint structure such as a spline structure so as to be relatively movable and so as to be integrally rotatable in the longitudinal direction S of the steering column 4.

The steering column 4 comprises a pair of steering column tubes 10 and 11 which are fitted so as to be relatively slidable. The pair of steering column tubes 10 and 11 includes the upper tube 10 serving as a movable tube accommodating a part of the upper shaft 8 and the lower tube 11 accommodating the lower shaft 9. The lower tube 11 regulates the relative movement in the axial direction of the lower shaft 9. The upper tube 10 regulates the relative movement in the axial direction of the upper shaft 8. The outer periphery at an end 13 of the lower tube 11 is fitted in the inner periphery at an end 12 of the upper tube 10 so as to be relatively slidable in their axial directions. At the time of shock absorption shown in Fig. 1B, for example, the steering wheel 2, the upper shaft 8, and the upper tube 10 integrally move downward in the longitudinal direction S of the steering column 4, and is displaced with respect to the lower tube 11.

In the collapsible steering apparatus 1, the steering column 4 swings the steering column 4 around a common center axis of a pair of tilt center shafts 14, so that a tilt adjusting function for adjusting the position at the height of the steering wheel 2 and a telescopic adjusting function for adjusting the longitudinal position of the steering wheel 2 in the longitudinal direction S of the steering column 4 are realized in the following manner.

The collapsible steering apparatus 1 has a first fixed bracket 15 fixed to and supported on the vehicle body 7 and a second fixed bracket 16 supported by the first fixed bracket 15.

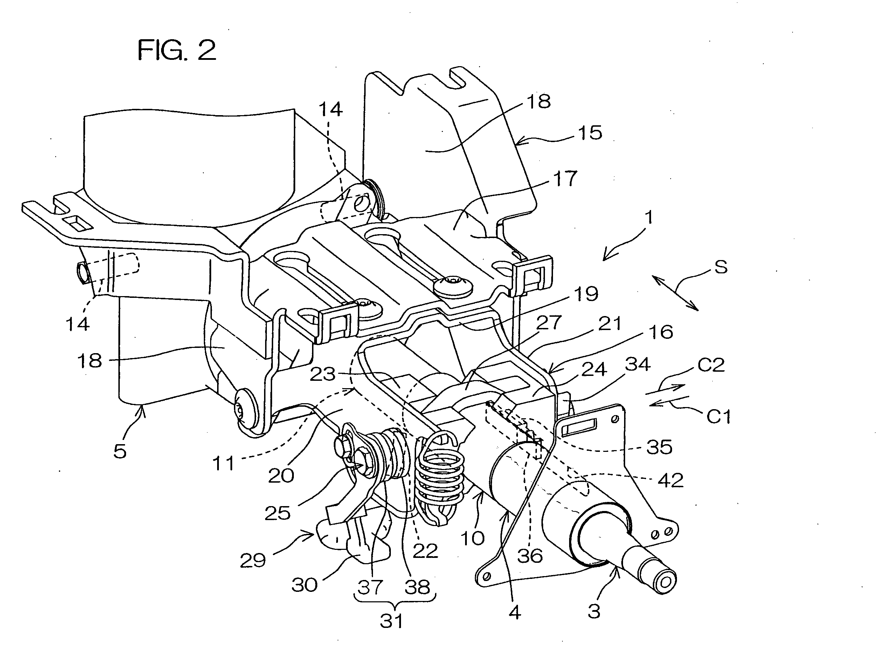

Referring to Fig. 2, the first fixed bracket 15 comprises a top plate 17 and a pair of side plates 18 provided in an extended manner so as to be opposed to each other from opposite side edges of the top plate 17. Through holes (not shown) composed of circular holes are respectively formed at corresponding positions of the pair of side plates 18. The tilt center shaft 14 corresponding to each of the through holes is inserted through and supported on the first fixed bracket 15. The tilt center shaft 14 is connected to the housing 5 included in a lower part in the longitudinal direction S of the steering column 4. The steering column 4 is supported on the first fixed bracket 15 so as to be swingable around the axis of the tilt center shaft 14.

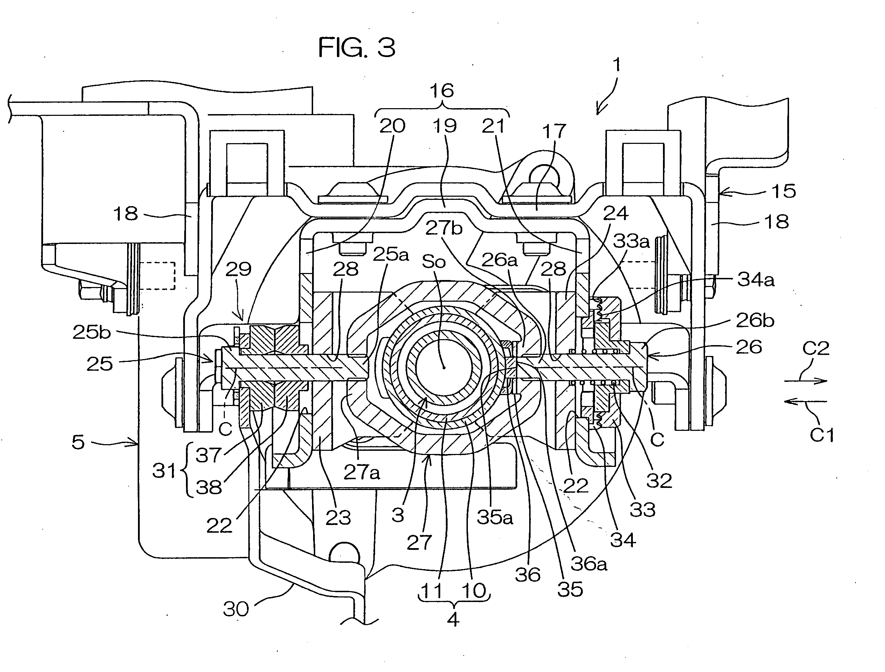

Referring to Figs. 2 and 3, the second fixed bracket 16 comprises a top plate 19 and a pair of side plates 20 and 21, opposed to each other, provided in an extended manner from a side edge of the top plate 19. The side plates 2,0 and 21 are respectively provided with circular arc-shaped lengthwise holes 22 serving as through holes. The lengthwise hole 22 extends in a direction perpendicular to the longitudinal direction S of the steering column 4. The top plate 19 is locked to the top plate 17 in the first fixed bracket 15.

The collapsible steering apparatus 1 comprises a pair of holding members 23 and 24 for holding the upper tube 10 with interposed between the pair of side plates 20 and 21 in the second fixed bracket 16 and the upper tube 10, a pair of supporting shafts 25 and 26 for respectively supporting the pair of holding members 23 and 24 on the pair of side plates 20 and 21 in the second fixed bracket 16, and an annular member 27 serving as a connecting member for surrounding the upper tube 10 and connecting the supporting shafts 25 and 26 to each other.

The holding members 23 and 24 respectively have through holes 28 through which the corresponding supporting shafts 25 and 26 are inserted. The holding members 23 and 24 are arranged opposed to each other on both right and left sides with the upper tube 10 interposed therebetween. When the side plates 20 and 21 in the second fixed bracket 16 are urged in such a manner as to move nearer to each other in a locked state, as described later, the side plates 20 and 21 respectively press the upper tube 10 from both sides through the corresponding holding members 23 and 24. Consequently, spacing between the side plates 20 and' 21 is regulated, so that the upper tube 10 is put at a predetermined position between the side plates 20 and 21. Further, the pair of holding members 23 and 24 holds the upper tube 10 so as to be relatively slidable in its axial direction (corresponding to the longitudinal direction S of the steering column 4).

The supporting shafts 25 and 26 are arranged on both sides with the upper tube 10 in the steering column 4 interposed therebetween, to extend toward both side parts of the upper tube 10. The axis C of each of the supporting shafts 25 and 26 passes through the axis S0 of the upper tube 10 or its vicinity. The supporting shafts 25 and 26 are respectively inserted through the corresponding lengthwise holes 22 in the second fixed bracket 16 and through holes 28 of the corresponding holding members 23 and 24. One ends 25a and 26a of the supporting shafts 25 and 26 are respectively fixed to corresponding side parts 27a and 27b of the annular member 27. The pair of supporting shafts 25 and 26 and the annular member 27 are respectively held by the holding members 23 and 24 so as to be movable in first and second axial directions C1 and C2 of the supporting shafts 25 and 26. Here, the first and second axial directions C1 and C2 are opposite to each other, and are perpendicular to the longitudinal direction S of the steering column 4. The pair of supporting shafts 25 and 26 and the annular member 27 are provided with a locking mechanism 29 for locking the upper tube 10 in the steering column 4 whose position has been adjusted so as to be releasable.

The locking mechanism 29 comprises an operation lever 30 rotated around the axis C of the supporting shaft 25, a cam mechanism 31 operated by the operation lever 30 for displacing the supporting shafts 25 and 26 in the first axial direction C1 for locking, a helical compression spring 32 serving as an urging member for urging the supporting shafts 25 and 26 in the second axial direction C2 for releasing locking, a pair of locking teeth forming elements 33 and 34, which relatively move so as to move nearer to and apart from each other as the supporting shafts 25 and 26 move, for locking the steering column 4 which has been tilt-adjusted, and a pair of locking teeth forming elements 35 and 36, which relatively move so as to move nearer to and apart from each other as the supporting shafts 25 and 26 move, for locking the steering column 4 which has been telescopically adjusted.

The cam mechanism 31 is provided at the other end 25b of the supporting shaft 25. The cam mechanism 31 comprises a cam 37 which is rotated integrally with the operation lever 30, and a cam follower 38 which is prevented from being rotated by the corresponding side plate 20 and is relatively rotated while coming into contact with the cam 37.

The cam 37 is fitted integrally with the supporting shaft 25 and is rotatable around the axis C of the supporting shaft 25, and is positioned so as to be unmovable relative to the supporting shaft 25 in the first and second axial directions C1 and C2. The cam follower 38 is fitted in the supporting shaft 25 so as to be relatively movable in the first and second axial directions C1 and C2. The cam 37 and the cam follower 38 respectively have cam surfaces each including a recess and a projection and brought into sliding contact with each other.

The helical compression spring 32 is interposed in a compressed state between the holding member 24 and the other end 26b of the supporting shaft 26. An urging force produced thereby is exerted so as to move the holding member 24 and the other end 26b of the supporting shaft 26 apart from each other.

The locking teeth forming elements 33 and 34 for tilt adjustment respectively form a plurality of locking teeth 33a and a plurality of locking teeth 34a which can be engaged with each other. The locking teeth forming element 33 and the other end 26b of the supporting shaft 26 are coupled to each other so as to be integrally movable. The locking teeth forming element 34 is fixed to the side plate 21. The teeth 33a and the teeth 34a serving as locking teeth opposed to each other in the pair of locking teeth forming elements 33 and 34 are engaged with each other, thereby preventing the relative movement of both the locking teeth forming elements 33 and 34 in the direction in which the lengthwise hole 22 extends.

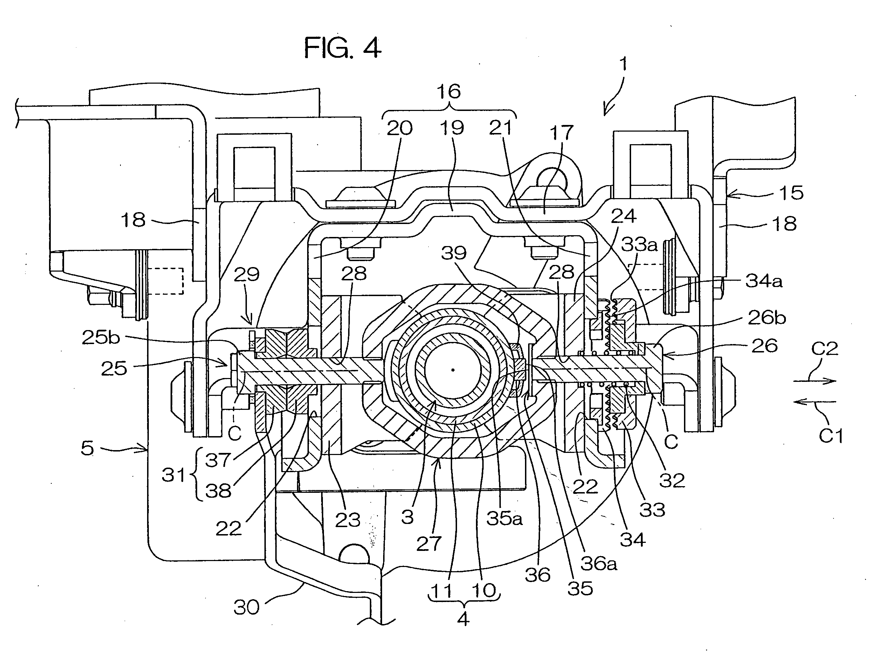

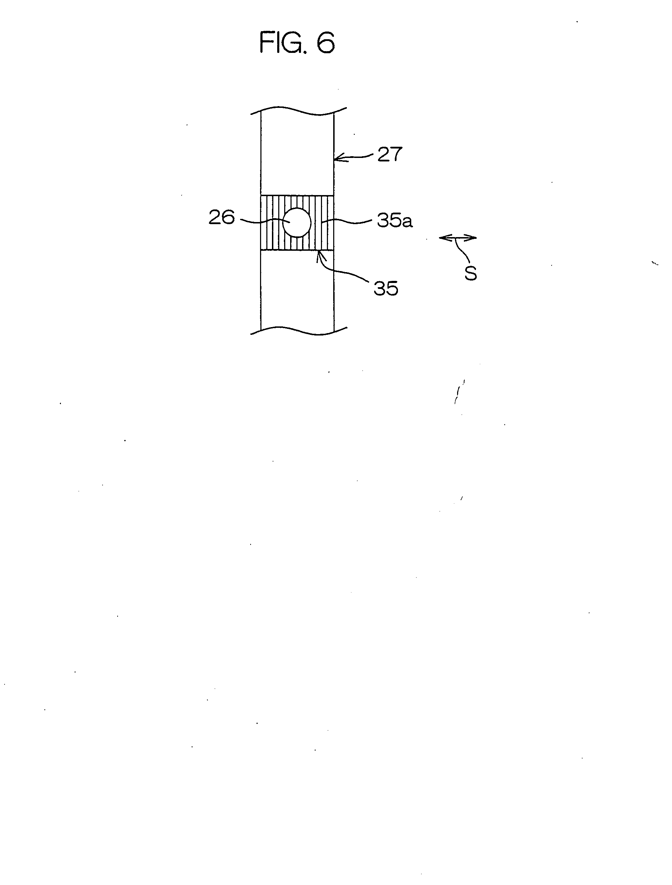

The annular member 27 functions as a member to be regulated whose movement in the longitudinal direction S of the steering column 4 is regulated at the time of collision of the vehicle. Referring to Figs. 4 and 6, the one locking teeth forming element 35 for telescopic adjustment is composed of a projection formed so as to project toward an inner side part of the annular member 27, and the plurality of locking teeth 35a are formed in the projection.

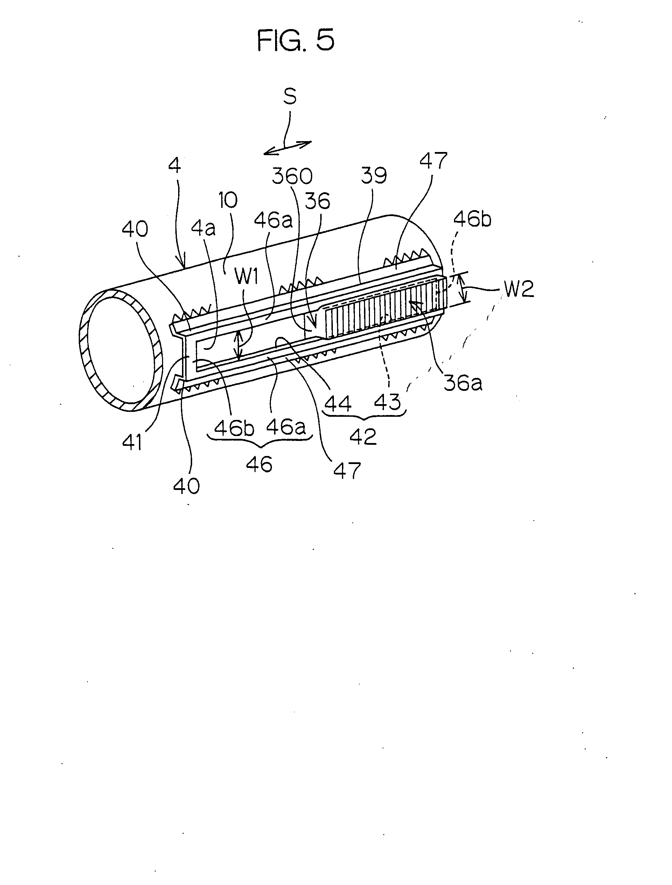

Referring to Fig. 5, the upper tube 10 is provided with a holder 39 for holding the other locking teeth forming element 36. The holder 39 has a groove shape in cross section, and is composed of a longitudinal member extending in the longitudinal direction S of the steering column 4. The holder 39 comprises a pair of side plates 40, and a connecting plate 41 for connecting the side plates 40 to each other. Flanges 47 are respectively provided in the side plates 40. The flanges 47 in the pair of side plates 40 are welded and fixed to the upper tube 10. A groove 42 extending in the longitudinal direction S of the steering column 4 is formed in the connecting plate 41 in the holder 39.

The holder 39 is movable integrally with the upper tube 10 serving as a movable tube, to hold the locking teeth forming element 36 with a part of the locking teeth forming element 36 accommodated therein.

The groove 42 comprises a first section 43 for holding the locking teeth forming element 36 press fitted therein by a predetermined holding force at the normal time, and a second section 44, adjacently connecting with the first section 43, for allowing the relative movement of the locking teeth forming element 36 at the time of shock absorption.

A peripheral surface 4a of the upper tube 10 functions as a receiving section for receiving a bottom 360 of the locking teeth forming element 36 fitted in the first section 43 in the groove 42.

The width W1 of the second section 44 is made smaller than the corresponding width W2 of the locking teeth forming element 36 held in the f,irst section 43. When an operating force for adjusting the position of the steering column 4 is exerted on the locking teeth forming element 36 at the normal time, the movement of the locking teeth forming element 36 relative to the groove 42 is prevented, so that the locking teeth forming element 36 and the upper tube 10 can integrally move. When a shock force at the time of collision is exerted on the locking teeth forming element 36 in excess of the above-mentioned predetermined holding force, the movement of the locking teeth forming element 36 relative to the groove 42 is allowed.

The second section 44 in the groove 42 is formed to a predetermined length corresponding to a shock absorbing stroke. The connecting plate 41 has an edge 46 of the groove 42. The edge 46 comprises a pair of edges 46a extending in the longitudinal direction S and a pair of edges 46b connecting both ends in the longitudinal direction S of the pair of edges 46a to each other.

The locking teeth forming element 36 is composed of a plate member, and a plurality of locking teeth 36a are formed in the plate member. The teeth 36a project outward from the groove 42 of the holder 39. Referring to Fig. 3, the plurality of teeth 35a and the plurality of teeth 36a in both the locking teeth forming elements 35 and 36 are arranged opposed to each other so as to be engageable. The teeth 35a and the teeth 36a serving as looking teeth are engaged with each other, thereby preventing the relative movement of both the locking teeth forming elements 35 and 36 in the longitudinal direction S of the steering column 4.

Referring to Fig. 3, in the collapsible steering apparatus 1, when the operation lever 30 in the locking mechanism 29 is rotated in one direction, the cam 37 and the cam follower 38 are relatively rotated in one direction, so that the projection of the cam 37 and the projection of the cam follower 38 are engaged with each other. When the projections are engaged with each other, an urging force is produced. By the urging force, the cam 37, the operation lever 30, the pair of supporting shafts 25 and 26, and the annular member 27 integrally move in the first axial direction C1 (a locking direction) against the urging force of the helical compression spring 32.

Correspondingly, the annular member 27 serving as a member whose movement in the longitudinal direction S of the steering column 4 is regulated advances to an advance position, the locking teeth forming elements 33 and 34 move nearer to each other, and the locking teeth forming elements 35 and 36 move nearer to each other. Consequently, the corresponding teeth 33a and 34a and the corresponding teeth 35a and 36a are respectively engaged with each other. As a result, locking is achieved.

Referring to Fig. 4, when the operation lever 30 in the locking mechanism 29 is rotated in the other direction, the recess of the cam 37 and the projection of the cam follower 38 are engaged with each other. As a result, by the urging force produced by the helical compression spring 32, the cam 37, the operation lever 30, the pair of supporting shafts 25 and 26, and the annular member 27 integrally move in the second axial direction C2 (a locking release direction). Correspondingly, the annular member 27 retreats to a retreat position, the locking teeth forming elements 33 and 34 move apart from each other, and the locking teeth forming elements 35 and 36 move apart from each other. Consequently, the corresponding teeth 33a and 34a and the corresponding teeth 35a and 36a are respectively disengaged from each other. As a result, locking is released.

Referring to Fig. 2, in a locking released state, the upper tube 10 is made slidable relative to both the holding members 23 and 24 in its axial direction (corresponding to the longitudinal direction S of the steering column 4). The holding members 23 and 24 are movable relative to the side plates 20 and 21 in the second fixed bracket 16 in the direction in which the lengthwise hole 22 extends. Consequently, the upper tube 10 is made positionally adjustable.

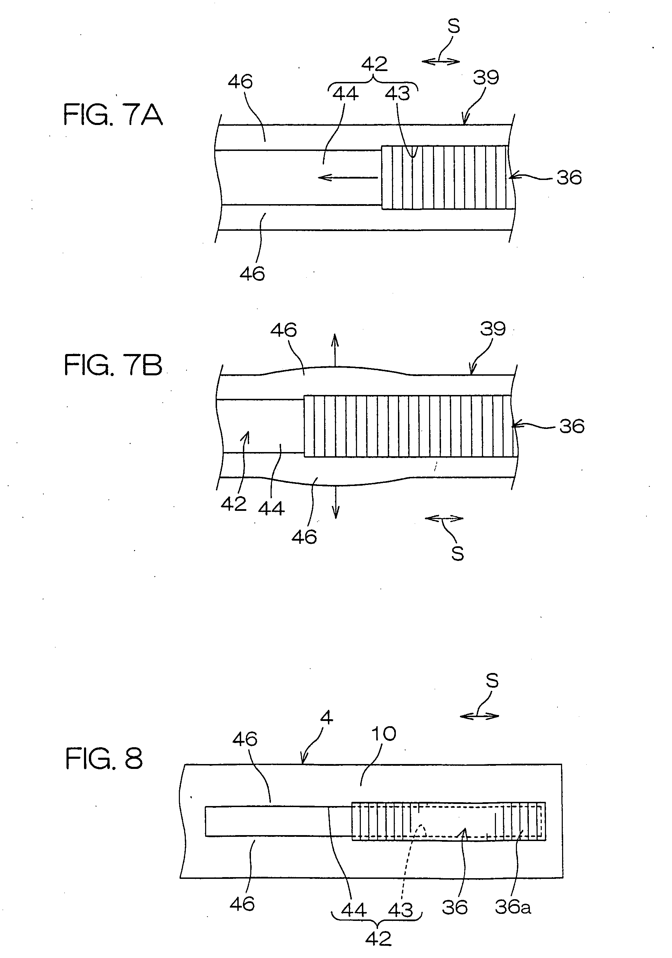

When a shock force at the time of collision is exerted on the upper tube 10, the locking teeth forming element 36 held in the groove 42 provided in the upper tube 10 moves relative to the groove 42, so that the upper tube 10 moves downward in its axial direction, and is displaced with respect to the pair of locking teeth forming elements 35 and 36, the holding members 23 and 24, the second fixed bracket 16, and so forth. Correspondingly, referring to Figs. 7A and 7B, the locking teeth forming element 36 advances to the second section 44 from the first section 43 in the groove 42, to enlarge and deform the edge 46 of the second section 44 in the groove 42 while being moved. The edge 46 of the groove 42 is mainly elastically deformed or plastically deformed, thereby absorbing shock in a case where a driver collides with the steering wheel 2 at the time of collision.

The deformation is utilized for shock absorption, thereby making it possible to more easily adjust a shock absorbing load, as compared with that in a conventional case where friction and fracture are utilized. For example, the shock absorbing load can be adjusted to a desired value by a simple operation such as adjustment of the width of the groove 42. Moreover, referring to Fig. 2, the movement of the locking teeth forming elements 35 and 36 relative to the first fixed bracket 15 serving as a fixing member can be restrained at the time of shock absorption. More preferably, the movement can be prevented, thereby making it possible to miniaturize the collapsible steering apparatus 1. Further, this also contributes to miniaturization in that the locking teeth forming element 36 is shared for both locking and shock absorption.

Referring to Fig. 5, the groove 42 is provided in the holder 39 formed separately from the upper tube 10, thereby making it possible to increase the degree of freedom of the arrangement of the groove 42 and the locking teeth forming element 36 and to easily assemble the locking teeth forming element 36 in the upper tube 10.

Description of another embodiment of the present invention is made. The following description is centered around points different from those in the above-mentioned embodiment, and the same components are assigned the same reference numerals to omit the description thereof. The same way is also applied to description of other embodiments.

In the embodiment shown in Fig. 8, a groove 42 is formed in an upper tube 10 itself, thereby omitting a holder. Consequently, a collapsible steering apparatus 1 can be further miniaturized, and can be made low in cost because the number of components can be reduced.

Although as the collapsible steering apparatus 1, the pair of tubes 10 and 11 in the steering column 4 relatively move, the overall steering column 4 may move. Further, it is also considered that the tilt adjusting function is omitted. The present invention may be applied to a manual steering apparatus in addition to the electric power steering apparatus.

While the invention has been described in detail with respect to specific embodiments thereof, it will be appreciated that those skilled in the art, upon attaining an understanding of the foregoing, may readily conceive of alterations to, variations of, and equivalents to these embodiments. Accordingly, the scope of the present invention should be assessed as that of the appended claims and any equivalents thereto.

## Claims

1. A collapsible steering apparatus for a vehicle (1), comprising:
a steering shaft (3) for connecting a steering wheel (2);
a steering column (4) for supporting the steering shaft (3) so as to be rotatable, the steering column (4) comprising a movable tube (10) which is displaceable in a longitudinal direction (S) of the steering column (4) in order to adjust the position of the steering wheel (2); and
a locking mechanism (29) capable of locking the movable tube (10) to a desired position in the longitudinal direction (S) of the steering column (4),
**characterized in that** the locking mechanism (29) comprises a locking teeth forming element (36) which has locking teeth (36a) formed therein and whose movement is regulated at a time of collision of the vehicle, and a groove (42) which holds the locking teeth forming element (36) by a predetermined holding force at a normal time and moves together with the movable tube (10) relative to the locking teeth forming element (36) at the time of collision of the vehicle,
the groove (42) comprises a pair of edges (46a) extending in the longitudinal direction (S) of the steering column (4), and
the pair of edges (46a) of the groove (42) is deformed as the locking teeth forming element (36) and the groove (42) relatively move so that shock energy is absorbed at the time of collision of the vehicle.

2. The apparatus of claim 1, **characterized in that**
the locking teeth forming element (36) is fitted in the groove (42) and is engaged with the pair of edges (46a) of the groove (42).

3. The apparatus of claim 2, **characterized in that**
the groove (42) comprises a first section (43) for holding the locking teeth forming element (36) by a predetermined holding force at the normal time and a second section (44), connecting with the first section (43), for allowing the movement thereof relative to the locking teeth forming element (36) at a time of shock absorption.

4. The apparatus of claim 3, **characterized in that** the width (W1) of the second section (44) in the groove (42) is smaller than the width (W2) of the first section (42).

5. The apparatus of any one of claims 1 to 4, **characterized in that**
the groove (42) is formed in either one of the movable tube (10) and a member (39) movable integrally with the movable tube (10).

6. The apparatus of claim 5, **characterized in that**
the member (39) movable integrally with the movable tube (10) has a groove shape in cross section, and extends in the longitudinal direction (S) of the steering column (4).

7. The apparatus of claim 6, **characterized in that**
the member (39) movable integrally with the movable tube (10) comprises a pair of side plates (40) fixed to the movable tube (10), and a connecting plate (41) for connecting the side plates (40) to each other,
the groove (42) including a groove (42) provided in the connecting plate (41).

8. The apparatus of claim 7, **characterized in that**
a flange (47) fixed to the movable tube (10) is provided in each of the side plates (40).

9. The apparatus of claim 6, 7, or 8, **characterized in that**
the member (39) movable integrally with the movable tube (10) comprises a holder (39) for holding the locking teeth forming element (36) with a part of the locking teeth forming element (36) accommodated therein.

10. The apparatus of claim 9, **characterized in that**
a bottom (360) of the locking teeth forming element (36) is received by a peripheral surface (4a) of the movable tube (10).

11. The apparatus of any one of claims 1 to 10, **characterized in that**
the steering column (4) comprises a pair of steering column tubes (10, 11) for supporting the steering shaft (3) so as to be rotatable,
the pair of steering column tubes (10, 11) comprises an upper tube (10) and a lower tube (11) which are fitted so as to be relatively slidable in its axial direction, and
the movable tube (10) includes the upper tube (10).

12. The apparatus of any one of claims 1 to 11, **characterized by**
a member (27) to be regulated whose movement in the longitudinal direction (S) of the steering column (4) is regulated at the time of collision of the vehicle,
the locking teeth (36a) including locking teeth (36a) engageable with the member (27) to be regulated.

13. The apparatus of claim 12, **characterized in that**
the member (27) to be regulated includes a member (27) which comprises locking teeth (35a) opposed to the locking teeth (36a) in the locking teeth forming element (36) so as to be engageable therewith, and can advance and retreat between an advance position where the locking teeth (35a) are engaged with the locking teeth (36a) in the locking teeth forming element (36) and a retreat position where the engagement is released in a direction (C1, C2) perpendicular to the longitudinal direction (S) of the steering column (4).
